# EUROPÄISCHE PATENTSCHRIFT

(11) **EP 3 313 677 B1**
(45) Veröffentlichungstag und Bekanntmachung des Hinweises auf die Patenterteilung: **20.03.2019**
(21) Anmeldenummer: 16728708.5
(22) Anmeldetag: 14.06.2016
(51) Int. Cl.: B60H 1/00, B60H 1/32

(54) **KONDENSATOREINHEIT EINER AUFDACHKLIMAANLAGE**
CONDENSER UNIT OF A ROOF-MOUNTED AIR CONDITIONING SYSTEM
UNITÉ À CONDENSATEUR D'UN CLIMATISEUR DE TOIT

(30) Priorität: 23.06.2015 DE 102015211605
(43) Veröffentlichungstag der Anmeldung: 02.05.2018
(73) Patentinhaber: Mahle International GmbH, 70376 Stuttgart (DE)
(72) Erfinder: HIPP-KALTHOFF, Christoph, 70192 Stuttgart (DE); KNORR, Hans-Henning, 73630 Remshalden (DE); VOIGT, Klaus, 74321 Bietigheim-Bissingen (DE)
(74) Vertreter: BRP Renaud & Partner mbB Rechtsanwälte Patentanwälte Steuerberater
(86) Internationale Anmeldenummer: PCT/EP2016/063558
(87) Internationale Veröffentlichungsnummer: WO 2016/207019

(56) Entgegenhaltungen:
- EP-A1- 1 498 293
- DE-A1-102006 009 735
- DE-A1-102006 062 261

## Beschreibung

Die vorliegende Erfindung betrifft eine Kondensatoreinheit für eine Aufdachklimaanlage eines Straßenfahrzeugs mit den Merkmalen des Oberbegriffs des Anspruchs 1. Die Erfindung betrifft außerdem eine mit einer derartigen Kondensatoreinheit ausgestattete Aufdachklimaanlage.

Klimaanlagen zum Klimatisieren eines Fahrzeuginnenraums sind allgemein bekannt. Eine solche Klimaanlage arbeitet mit wenigstens einem Kältekreis, in dem ein Kältemittel zirkuliert und in dem zumindest ein Verdampfer zum Verdampfen des Kältemittels, mindestens ein Kondensator zum Kondensieren des Kältemittels sowie wenigstens eine Fördereinrichtung zum Antreiben des Kältemittels im Kältemittelkreis angeordnet sind. Mit Hilfe des Verdampfers, der als Wärmeübertrager ausgestaltet ist, kann ein Luftstrom gekühlt werden, der dem zu klimatisierenden Fahrzeuginnenraum zugeführt werden soll. Die hierbei dem Luftstrom entzogene Wärme kann über den Kondensator zum Beispiel einer Umgebung des Fahrzeugs zugeführt werden. Zweckmäßig ist hierzu auch der Kondensator als Wärmeübertrager ausgestaltet, der beispielsweise von einem Kühlluftstrom durchströmt wird, der die Wärme mitnimmt.

Während bei Personenkraftwagen die Klimaanlagen üblicherweise in das Fahrzeug integriert sind, ist bei Großraumfahrzeugen, wie zum Beispiel bei Nutzfahrzeugen, Omnibussen und dergleichen, auch eine externe Anbringung, nämlich bevorzugt auf einem Fahrzeugdach möglich. Dieser auf dem Fahrzeugdach montierte Teil der Klimaanlage wird als Aufdachklimaanlage bezeichnet.

Eine derartige Aufdachklimaanlage umfasst zumindest eine Verdampfereinheit, die in einem Gehäuse wenigstens einen Verdampfer aufweist. Das Gehäuse weist dabei üblicherweise ein Gehäuseunterteil sowie ein Gehäuseoberteil auf. Im Gehäuse können außerdem zumindest ein Luftfilter und wenigstens ein Verdampfergebläse angeordnet sein. Der jeweilige Verdampfer dieser Verdampfereinheit ist wie vorstehend erläutert in einen Kältekreis eingebunden. Der zugehörige Kondensator kann grundsätzlich an jeder beliebigen anderen, geeigneten Stelle des Fahrzeugs angeordnet sein. Beispielsweise in einem Motorraum des Fahrzeugs bzw. in einem Raum des Fahrzeugs, in dem auch ein Hauptkühler eines Motorkühlkreises angeordnet ist. Insbesondere kann die Aufdachklimaanlage über den Kältekreis somit an einen ohnehin bereits am Fahrzeug vorhandenen Kondensator angeschlossen sein. Sofern die Aufdachklimaanlage mit einem eigenen Kondensator ausgestattet ist, umfasst sie außerdem eine Kondensatoreinheit, die zumindest einen Kondensator aufweist. Ferner kann ein Kondensatorgebläse vorgesehen sein. Zweckmäßig kann auch eine Lüfterzarge vorgesehen sein, die einen Strömungskanal definiert, der den Kondensator mit dem Kondensatorgebläse verbindet.

Ferner kann eine derartige Aufdachklimaanlage mit einer Haube ausgestattet sein, die zum Abdecken der Verdampfereinheit sowie gegebenenfalls zum Abdecken der Kondensatoreinheit dient.

Derartige Aufdachklimaanlagen besitzen eine vergleichsweise komplexe Struktur, so dass der Aufwand zum Herstellen sowie zum Montieren einer derartigen Aufdachklimaanlage am Fahrzeug vergleichsweise groß ist.

Eine Aufdachklimaanlage für ein Schienenfahrzeug ist beispielsweise aus der DE 10 2009 056 968 B3 bekannt. Sie besitzt ein kastenförmiges Gehäuse, in dem mehrere Verdampfereinheiten und mehrere Kondensatoreinheiten untergebracht sind, wobei ein Rahmen des Gehäuses Einlassöffnungen für die Verdampfer und Einlassöffnungen für die Kondensatoren aufweist. Ein auf den Rahmen aufgesetzter Deckel verschließt das Gehäuse.

Weitere Aufdachklimaanlagen für Straßenfahrzeuge sind auch aus der DE 10 2006 047 367 B4, DE 10 2012 018 272 A1 und aus der DE 10 2012 216 039 A1 bekannt. Sie zeichnen sich jeweils dadurch aus, dass zwei Verdampfereinheiten beiderseits einer mittig angeordneten Kondensatoreinheit angeordnet sind, so dass die Kondensatoreinheit bezüglich einer Fahrzeugquerrichtung zwischen den beiden Verdampfereinheiten angeordnet ist. Bei der DE 10 2012 216 039 A1 weisen die beiden Verdampfereinheiten jeweils ein Gehäuseunterteil auf, die jeweils an ein dazwischen angeordnetes Gehäuseunterteil der Kondensatoreinheit angebaut sind. Bei der DE 10 2006 047 367 B4 sind die Gehäuse für die Verdampfereinheiten und für die Kondensatoreinheit in der Fahrzeuglängsrichtung modular aufgebaut, so dass zwischen zwei Endmodulen eine variierende Anzahl an Zwischenmodulen angeordnet werden kann. Hierzu sind die Grundkörper der Gehäuse sowie die zugehörigen Klappen zum Verschließen der nach oben offenen Grundkörper in der Fahrzeuglängsrichtung aneinander fixierbar. Aus der DE 10 2012 018 272 A1 ist es bekannt, die Grundkörper der Gehäuse für die Verdampfereinheiten und die Kondensatoreinheit mit Hilfe von Hauben abzudecken, wobei die außen liegenden Hauben der seitlichen Verdampfereinheiten an der mittigen Haube der mittleren Kondensatoreinheit um eine parallel zur Fahrzeuglängsachse verlaufende Schwenkachse schwenkbar gelagert sind.

Eine hierbei zur Anwendung kommende Kondensatoreinheit umfasst zumindest einen Kondensator, der bei üblicher Bauweise mehrere in einer Längsrichtung des Kondensators parallel zueinander verlaufende Kondensationsrohre aufweist, die an ihren Längsenden einerseits mit einem ersten Sammelrohr des Kondensators und andererseits mit einem zweiten Sammelrohr des Kondensators verbunden sind. Die beiden Sammelrohre erstrecken sich dabei parallel zueinander und jeweils in einer Querrichtung des Kondensators. Für die Montage des Kondensators in einem Gehäuse der Kondensatoreinheit können am Kondensator entsprechende Halteelemente vorgesehen werden, beispielsweise Haltelaschen, die an den Längsenden des Kondensators an die Sammelrohre angelötet sind. Gehäuseseitig sind dann dazu komplementäre Befestigungsstellen vorzusehen. Der Aufwand für die Herstellung und Montage einer derartigen Kondensatoreinheit ist dadurch vergleichsweise groß.

Eine gattungsgemäße Kondensatoreinheit ist aus der DE 10 2006 062261 A1 gemäß Oberbegriff des Anspruchs 1 bekannt und umfasst einen Kondensator der vorstehend beschriebenen Art sowie einen Träger zum Befestigen der Kondensatoreinheit an einem Fahrzeugdach, wobei der Träger einen dem ersten Sammelrohr zugeordneten ersten Auflagebereich, auf dem das erste Sammelrohr aufliegt, und einen dem zweiten Sammelrohr zugeordneten zweiten Auflagebereich aufweist, auf dem das zweite Sammelrohr aufliegt.

Aus der EP 1 498 293 A1 ist eine Lüfterzarge bekannt, die an einem Träger schwenkbar gehalten ist. Der Träger ist an enem Fahrzeugdach befestigt. An der Lüfterzarge ist ein Kondensator in zwei Haltebereichen gehalten, so dass er gemeinsam mit der Lüfterzarge am Träger schwenkbar gehalten ist.

Die vorliegende Erfindung beschäftigt sich mit dem Problem, für eine derartige Kondensatoreinheit bzw. für eine damit ausgestattete Aufdachklimaanlage eine verbesserte Ausführungsform anzugeben, die sich insbesondere durch eine kostengünstige Herstellung bzw. durch eine vereinfachte Montage auszeichnet. Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Kondensator mit Hilfe der Lüfterzarge an einen Träger der Kondensatoreinheit festzulegen, derart, dass auf zusätzliche Befestigungsmittel verzichtet werden kann. Zu diesem Zweck sind am Träger zwei Auflagebereiche vorgesehen, die den beiden Sammelrohren des Kondensators zugeordnet sind. Außerdem sind an der Lüfterzarge zwei Haltebereiche vorgesehen, die ebenfalls den beiden Sammelrohren des Kondensators zugeordnet sind. Die Haltebereiche, die Auflagebereiche und die Sammelrohre sind so aufeinander abgestimmt, dass das eine oder erste Sammelrohr mit Hilfe des einen oder ersten Haltebereichs an dem einen oder ersten Anlagebereich gehalten ist, während das andere oder zweite Sammelrohr mit Hilfe des anderen oder zweiten Haltebereichs am anderen oder zweiten Auflagebereich gehalten ist. Mit anderen Worten, der erste Haltebereich bildet mit dem ersten Auflagebereich eine erste Halterung für das erste Sammelrohr, während der zweite Haltebereich mit dem zweiten Auflagebereich eine zweite Halterung für das zweite Sammelrohr bildet. Der Kondensator ist nun über diese erste Halterung und diese zweite Halterung innerhalb der Kondensatoreinheit positioniert und fixiert. Zusätzliche, separate Befestigungsmittel sind zum Festlegen des Kondensators innerhalb der Kondensatoreinheit demnach nicht erforderlich. Eine bevorzugte Ausführungsform ergibt sich daher, wenn der Kondensator ausschließlich über diese erste Halterung und diese zweite Halterung innerhalb der Kondensatoreinheit positioniert und fixiert ist.

Erfindungsgemäß ist die erste Halterung als Festlager konfiguriert, während die zweite Halterung als Loslager konfiguriert ist. Das Loslager ermöglicht Relativbewegungen des zweiten Sammelrohrs innerhalb der zweiten Halterung entlang der Längsrichtung des Kondensators. Auf diese Weise kann sich der Kondensator thermisch bedingt relativ zum Träger und relativ zur Lüfterzarge ausdehnen, ohne dass es dabei zu Verspannungen kommt. Im Einzelnen bilden der erste Auflagebereich, der erste Haltebereich und das erste Sammelrohr bezüglich der Längsrichtung des Kondensators das Festlager für den Kondensator, während der zweite Auflagebereich, der zweite Haltebereich und das zweite Sammelrohr bezüglich der Längsrichtung des Kondensators das Loslager für den Kondensator bilden. Zu thermisch bedingten Relativbewegungen kann es insbesondere während des Betriebs der Kondensatoreinheit kommen, da der in der Regel metallische Kondensator einen anderen thermischen Ausdehnungskoeffizienten aufweist als der vorzugsweise aus Kunststoff hergestellte Träger bzw. als die vorzugsweise aus Kunststoff hergestellte Lüfterzarge.

Bei einer anderen vorteilhaften Ausführungsform kann in der ersten Halterung, also am ersten Auflagebereich und/oder am ersten Haltebereich zumindest eine Anlagekontur vorgesehen sein, die das erste Sammelrohr an einer dem zweiten Sammelrohr zugewandten Seite zumindest teilweise übergreift. Hierdurch ist eine Relativbewegung des Kondensators im Bereich des ersten Sammelrohrs in der Längsrichtung durch die besagte Anlagekontur begrenzt. Vorzugsweise liegt das erste Sammelrohr an dieser Anlagekontur in der Längsrichtung an. Die Anlagekontur bildet bezüglich der Längsrichtung eine formschlüssige Positionierung für das erste Sammelrohr, derart, dass sich das erste Sammelrohr bestenfalls bis zur Anlage an diese Anlagekontur in Richtung des zweiten Sammelrohrs bewegen kann. Hierdurch wird das Festlager innerhalb der ersten Halterung geschaffen.

Bei einer anderen Ausführungsform kann in der ersten Halterung, also am ersten Auflagebereich und/oder am ersten Haltebereich wenigstens eine Anlagerippe vorgesehen sein, die am ersten Sammelrohr an einer dem zweiten Sammelrohr zugewandten Seite in einem Zwischenraum eingreift, der zwischen zwei benachbarten Kondensationsrohren ausgebildet ist. Hierdurch wird ein besonders intensiver Formschluss bezüglich der Längsrichtung zwischen der ersten Halterung und dem ersten Sammelrohr realisiert. Gleichzeitig lässt sich hierdurch auch eine Positionierung des Kondensators bezüglich der Querrichtung des Kondensators realisieren, was die Montage des Kondensators vereinfacht.

Die Kondensationsrohre sind in der Querrichtung des Kondensators nebeneinander bzw. benachbart angeordnet. In den Zwischenräumen benachbarter Kondensationsrohre können in üblicher Weise Lamellen angeordnet sein, um die Wärmeübertragung zwischen einer Luftströmung, die den Kondensator von außen durchströmt und einem Kältemittel, das im Inneren des Kondensators strömt, verbessert werden. Die Kondensationsrohre können zweckmäßig als Flachrohre konzipiert sein, die sich durch einen flachen Querschnitt auszeichnen, dessen Breite deutlich größer ist als dessen Höhe. Die Höhe dieses Querschnitts erstreckt sich dabei in der Querrichtung des Kondensators, während sich die Breite des Querschnitts senkrecht zu einer Kondensatorebene erstreckt, die durch die Querrichtung und die Längsrichtung des Kondensators aufgespannt ist.

Bei einer anderen vorteilhaften Ausführungsform können der erste Haltebereich und der zweite Haltebereich an der Lüfterzarge integral ausgeformt sein. Bevorzugt lässt sich die Lüfterzarge aus einem Kunststoff spritzformen. Besonders preiswert lassen sich daher der erste Haltebereich und der zweite Haltebereich gemeinsam mit der übrigen Lüfterzarge mittels Spritzformtechnik in einem Stück aus Kunststoff herstellen.

Bei einer anderen Ausführungsform kann der Träger einen Rahmen zum Befestigen der Kondensatoreinheit am Fahrzeugdach aufweisen, an dem der erste Auflagebereich und der zweite Auflagebereich ausgebildet sind. Die Auflagebereiche koppeln somit den Kondensator mit dem Rahmen, der für die Montage am Fahrzeugdach vorbereitet und geformt ist.

Gemäß einer Weiterbildung können der erste Auflagebereich und der zweite Auflagebereich am Rahmen integral ausgeformt sein. Der Rahmen lässt sich besonders preiswert mittels Spritzformtechnik aus Kunststoff herstellen. Bei der Herstellung des Rahmens lassen sich somit die Auflagebereiche integrieren, so dass die beiden Auflagebereiche gemeinsam mit dem übrigen Rahmen durch Spritzgießen in einem Stück hergestellt werden können.

Bei einer anderen vorteilhaften Ausführungsform kann der Rahmen im Wesentlichen eben ausgestaltet sein und in einer Rahmenebene liegen. Ferner kann der Kondensator im Wesentlichen eben ausgestaltet sein und in einer Kondensatorebene liegen. Innerhalb der Kondensatoreinheit sind im zusammengebauten Zustand die Rahmenebene und die Kondensatorebene zueinander geneigt. Es hat sich gezeigt, dass hierdurch eine besonders flache Bauweise für die mit der Kondensatoreinheit ausgestattete Aufdachklimaanlage realisierbar ist.

Gemäß einer vorteilhaften Weiterbildung kann der Kondensator im Bereich eines ersten Querendes näher an der Rahmenebene liegen als im Bereich eines zweiten Querendes des Kondensators. Hierdurch kann im Bereich des zweiten Querendes zwischen dem Rahmen und dem Kondensator eine Lufteinlassöffnung ausgebildet werden. Durch die Neigung zwischen Rahmenebene und Kondensatorebene lässt sich diese Lufteinlassöffnung besonders einfach realisieren, wobei gleichzeitig eine relativ geringe Bauhöhe für die Kondensatoreinheit und letztlich für die damit ausgestattete Aufdachklimaanlage realisierbar ist. Beispielsweise kann zwischen der Rahmenebene und der Kondensatorebene ein vergleichsweise kleiner Winkel eingeschlossen sein, der maximal 30°, vorzugsweise maximal 20° und insbesondere maximal 15° beträgt.

Bei einer anderen vorteilhaften Ausführungsform kann die Lüfterzarge eine Luftauslassöffnung aufweisen, an oder in der das Kondensatorgebläse angeordnet ist. Optional kann das Kondensatorgebläse an der Lüfterzarge befestigt sein. Das Kondensatorgebläse arbeitet hier als Sauggebläse, das im Strömungskanal einen Luftstrom erzeugt, der durch den Kondensator angesaugt wird und durch die Luftauslassöffnung ausgeblasen wird. Zweckmäßig ist das Kondensatorgebläse innerhalb der Lüfterzarge an der Luftauslassöffnung angeordnet, wodurch die Kondensatoreinheit besonders kompakt baut.

Bei einer anderen vorteilhaften Weiterbildung kann vorgesehen sein, dass die Luftauslassöffnung in einer Auslassebene liegt, die sich im Wesentlichen parallel zur Rahmenebene erstreckt. Ferner ist zweckmäßig vorgesehen, dass das zweite Querende des Kondensators im Bereich dieser Auslassebene liegt. Auch diese Bauweise führt zu einem extrem kompakten Aufbau der Kondensatoreinheit.

Die Querenden des Kondensators beziehen sich auf die Querrichtung des Kondensators, während sich die Längsenden des Kondensators auf die Längsrichtung des Kondensators beziehen.

Eine erfindungsgemäße Aufdachklimaanlage, die sich für ein Straßenfahrzeug eignet, ist mit einer Verdampfereinheit ausgestattet, die zumindest einen Verdampfer aufweist. Des Weiteren ist die Aufdachklimaanlage mit einer Kondensatoreinheit der vorstehend beschriebenen Art ausgestattet. Schließlich ist die Aufdachklimaanlage mit einer Haube ausgestattet, die so dimensioniert ist, dass sie die Verdampfereinheit und die Kondensatoreinheit abdeckt.

Die Verdampfereinheit kann üblicherweise außerdem ein Verdampfergebläse aufweisen, um einen zu kühlenden Luftstrom anzutreiben. Zweckmäßig sind der Verdampfer und der Kondensator in einen Kältekreis eingebunden, in dem ein Kältemittel zirkuliert, um einen Kälteprozess zu realisieren. Im Kältekreis ist üblicherweise ein Kompressor oder dergleichen zum Antreiben des Kältemittels angeordnet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte Frontansicht eines Straßenfahrzeugs mit Aufdachklimaanlage,
- Fig. 2: eine isometrische Ansicht von oben der Aufdachklimaanlage,
- Fig. 3: eine auseinandergezogene isometrische Ansicht von oben der Aufdachklimaanlage,
- Fig. 4: eine isometrische Ansicht von oben der Aufdachklimaanlage bei weggelassener Haube im Bereich einer Kondensatoreinheit,
- Fig. 5: eine isometrische Ansicht von oben wie in Fig. 4, jedoch bei weggelassener Lüfterzarge,
- Fig. 6: eine isometrische Ansicht von oben wie in Fig. 5, jedoch bei weggelassenem Kondensator,
- Fig. 7: eine isometrische Ansicht auf einen Festlagerbereich des Kondensators bei weggelassener Lüfterzarge,
- Fig. 8: eine isometrische Ansicht wie in Fig. 7, jedoch mit der Lüfterzarge,
- Fig. 9: eine isometrische Ansicht eines Loslagerbereichs des Kondensators bei weggelassener Lüfterzarge,
- Fig. 10: eine isometrische Ansicht wie in Fig. 9, jedoch mit der Lüfterzarge,
- Fig. 11: eine isometrische Ansicht der Kondensatoreinheit im Bereich des Loslagers.

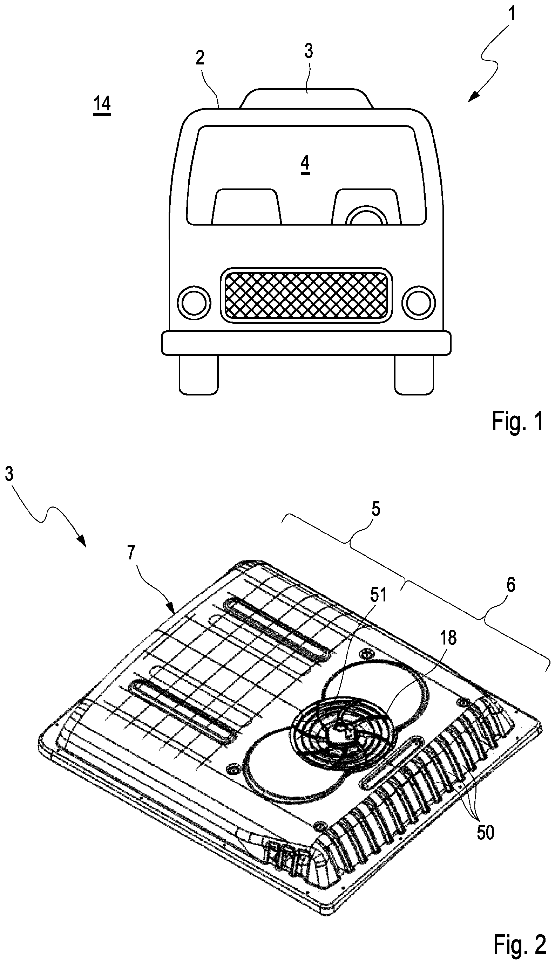

Entsprechend Fig. 1 kann ein Straßenfahrzeug 1, das hier als Omnibus dargestellt ist, auf seinem Fahrzeugdach 2 eine Aufdachklimaanlage 3 aufweisen, die zur Kühlung eines Fahrzeuginnenraums 4 dient.

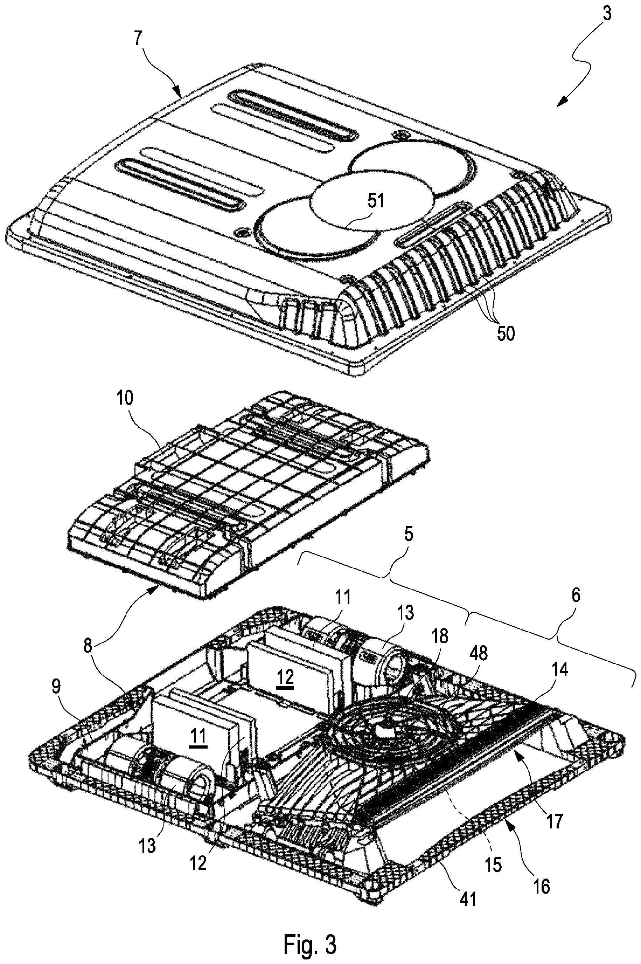

Gemäß den Fig. 2 und 3 umfasst eine derartige Aufdachklimaanlage 3 eine Verdampfereinheit 5 und eine Kondensatoreinheit 6, die mit einer gemeinsamen Haube 7 abgedeckt sind. Die Verdampfereinheit 5 umfasst gemäß Fig. 3 ein Gehäuse 8, das ein Gehäuseunterteil 9 und ein Gehäuseoberteil 10 besitzt. Im Gehäuse 8 ist zumindest ein Verdampfer 11 angeordnet. Im gezeigten Beispiel sind zwei derartige Verdampfer 11 vorgesehen. Jedem Verdampfer 11 ist ein Luftfilter 12 vorgeordnet und ein Verdampfergebläse 13 nachgeordnet. Die Verdampfereinheit 5 dient zum Kühlen eines Luftstroms, der dem Fahrzeuginnenraum 4 zugeführt wird. Hierzu kann die Verdampfereinheit 5 Luft aus einer Umgebung 14 des Fahrzeugs 1 ansaugen, um dem Fahrzeuginnenraum 4 gekühlte Frischluft zuzuführen. Ebenso kann die Verdampfereinheit 5 dem Fahrzeuginnenraum 4 Luft entziehen und als gekühlte Umluft dem Fahrzeuginnenraum 4 wieder zuführen. Üblicherweise liegt ein Mischbetrieb vor, bei dem die Verdampfereinheit 5 der Umluft Frischluft zumischt und gekühlt dem Fahrzeuginnenraum 4 zuführt. Das Mischungsverhältnis ist in vorgegebenen Grenzen einstellbar. Beispielsweise kann hierzu die aus der Umgebung 14 angesaugte Frischluftmenge gesteuert werden. Hierzu kann die Verdampfereinheit 5 mit einer hier nicht gezeigten Steuereinrichtung ausgestattet sein, die z.B. mit Steuerklappen, Steuerschiebern oder dergleichen arbeitet.

Der jeweilige Verdampfer 11 ist in einen hier nicht gezeigten Kältekreis eingebunden, in dem ein Kältekreisprozess mit Phasenwechsel eines Kältemediums im jeweiligen Verdampfer 11 abläuft.

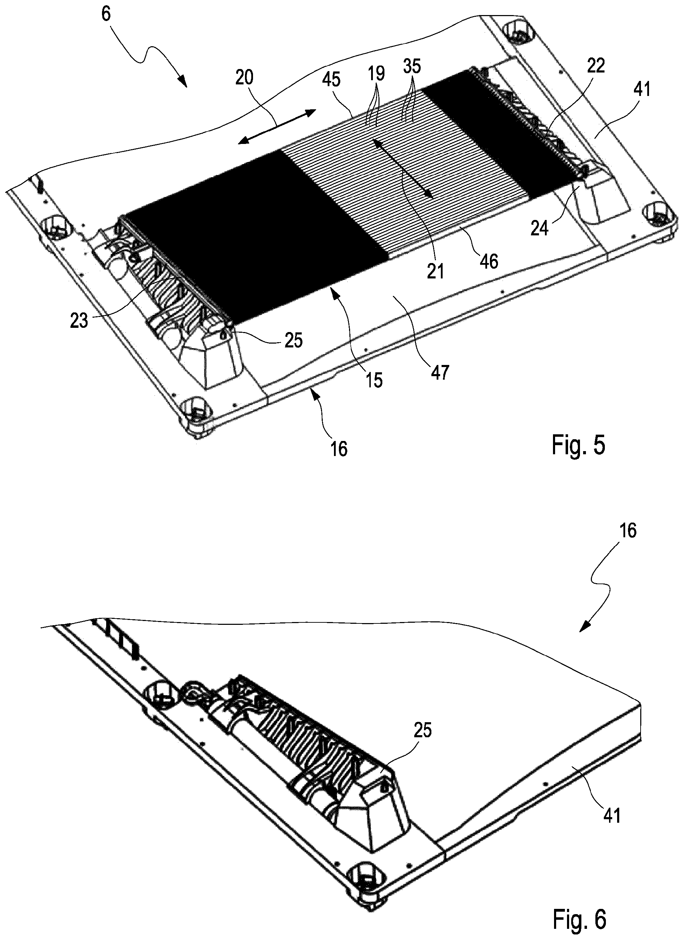

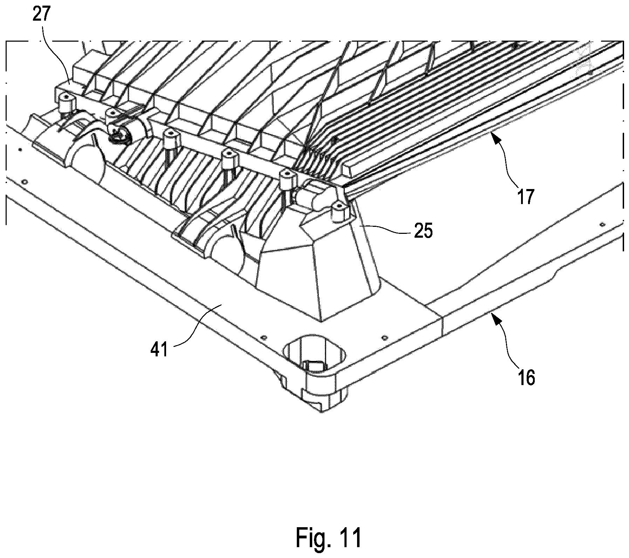

Gemäß den Fig. 3 bis 11 umfasst die Kondensatoreinheit 6 einen Kondensator 15, einen Träger 16, eine Lüfterzarge 17 und ein Kondensatorgebläse 18. Der Kondensator 15 besitzt gemäß den Fig. 5 und 7 bis 10 mehrere Kondensationsrohre 19, die in einer Längsrichtung 20 des Kondensators 15 parallel zueinander verlaufen und die bezüglich einer Querrichtung 21 des Kondensators 15 nebeneinander angeordnet und zueinander benachbart sind. Ferner weist der Kondensator 15 an seinen Längsenden bzw. an den Längsenden der Kondensationsrohre 19 einerseits bzw. einenends ein erstes Sammelrohr 22 und andererseits bzw. anderenends ein zweites Sammelrohr 23 auf. Die beiden Sammelrohre 22, 23 sind mit den Kondensationsrohren 19 verbunden, z.B. verlötet. Die Sammelrohre 22, 23 erstrecken sich parallel zueinander sowie parallel zur Querrichtung 21 des Kondensators 15. Die Sammelrohre 22, 23 dienen im Kondensator 15 zum Zuführen des weitgehend gasförmigen Kältemittels bzw. Abführen des weitgehend flüssigen Kältemittels. In den Kondensationsrohren 19 erfolgt die Kondensation des Kältemittels, also der Phasenwechsel von gasförmig zu flüssig, was mit einer großen Wärmeabgabe einhergeht.

Der Träger 16 dient zum Befestigen der Kondensatoreinheit 6 am Fahrzeugdach 2 und weist zwei Auflagebereiche, nämlich einen ersten Auflagebereich 24 und einen zweiten Auflagebereich 25 auf, die in der Längsrichtung 20 des Kondensators 15 voneinander beabstandet sind und sich jeweils in der Querrichtung 21 des Kondensators 15 erstrecken. Der erste Auflagebereich 24 ist dem ersten Sammelrohr 22 zugeordnet und so geformt, dass das erste Sammelrohr 22 daran zur Anlage kommt. Der zweite Auflagebereich 25 ist dem zweiten Sammelrohr 23 zugeordnet und so ausgestaltet, dass das zweite Sammelrohr 23 daran zur Anlage kommt.

Die Lüfterzarge 17 weist zwei Haltebereiche, nämlich einen ersten Haltebereich 26 und einen zweiten Haltebereich 27 auf, die in der Längsrichtung 20 des Kondensators 15 voneinander beabstandet sind und die sich parallel zur Querrichtung 21 des Kondensators 15 erstrecken. Der erste Haltebereich 26 ist dem ersten Sammelrohr 22 zugeordnet. Der zweite Haltebereich 27 ist dem zweiten Sammelrohr 23 zugeordnet. Die Haltebereiche 26, 27 und die Auflagebereiche 24, 25 sind so auf die Sammelrohre 22, 23 abgestimmt, dass im montierten Zustand der Kondensator 15 mit Hilfe der Lüfterzarge 17 am Träger 16 gehalten ist. Hierzu ist das erste Sammelrohr 22 mit dem ersten Haltebereich 26 am ersten Auflagebereich 24 gehalten, während das zweite Sammelrohr 23 mit dem zweiten Haltebereich 27 am zweiten Auflagebereich 25 gehalten ist. Im zusammengebauten Zustand bilden somit der erste Haltebereich 26 und der erste Auflagebereich 24 eine erste Halterung 28 für das erste Sammelrohr 22, während der zweite Haltebereich 27 mit dem zweiten Auflagebereich 25 eine zweite Halterung 29 für das zweite Sammelrohr 23 bilden.

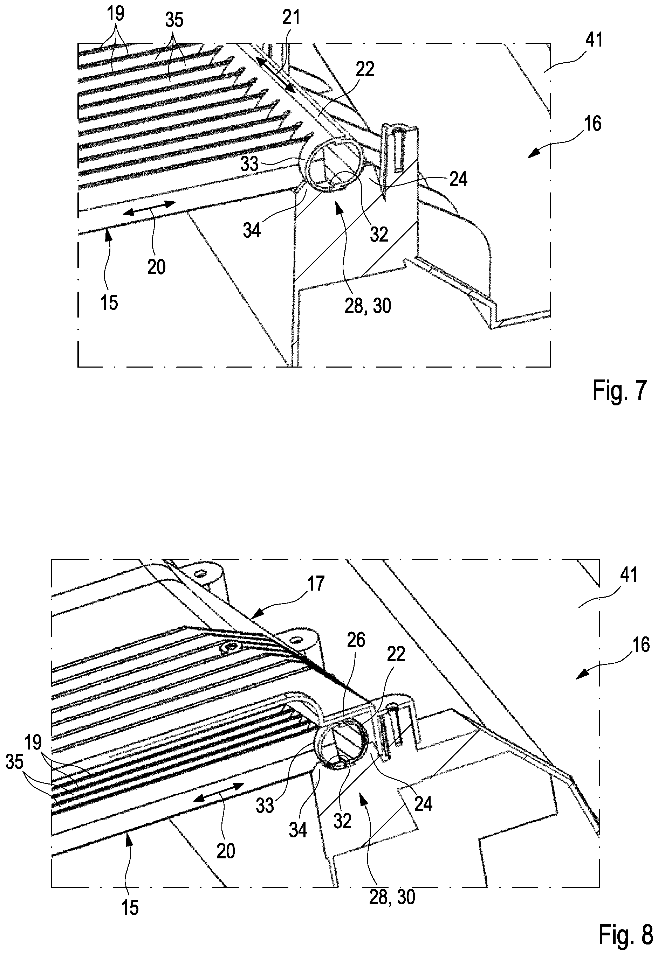

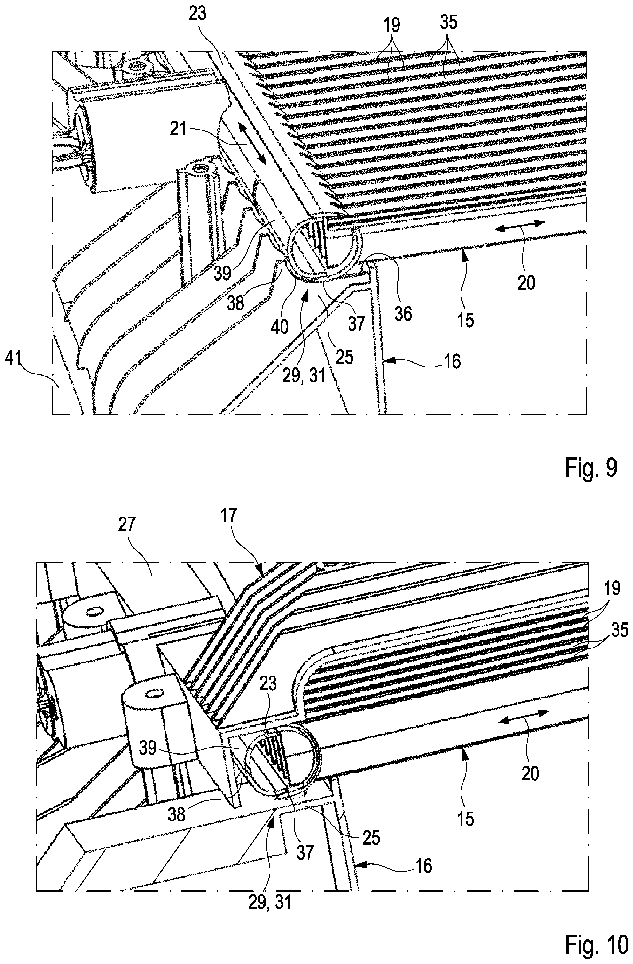

In den Fig. 7 und 8 ist dabei jeweils eine isometrische Schnittansicht im Bereich der ersten Halterung 28 wiedergegeben, und zwar in Fig. 7 ohne die Lüfterzarge 17 und in Fig. 8 mit der Lüfterzarge 17. Analog dazu zeigen die Fig. 9 und 10 jeweils eine isometrische Schnittansicht im Bereich der zweiten Halterung 29, und zwar in Fig. 9 ohne die Lüfterzarge 17 und in Fig. 10 mit der Lüfterzarge 17. Gemäß den Fig. 7 bis 10 bildet die erste Halterung 28 ein Festlager 30 für das erste Sammelrohr 22 und somit für den Kondensator 15. Die zweite Halterung 29 bildet dagegen ein Loslager 31 für das zweite Sammelrohr 23 und somit für den Kondensator 15. Im Einzelnen bilden der erste Auflagebereich 24, der erste Haltebereich 26 und das erste Sammelrohr 22 das Festlager 30 für den Kondensator 15, während der zweite Auflagebereich 25, der zweite Haltebereich 27 und das zweite Sammelrohr 23 das Loslager 31 für den Kondensator 15 bilden.

Zur Realisierung des Festlagers 30 kann gemäß den Fig. 7 und 8 am ersten Auflagebereich 24 eine Anlagekontur 32 vorgesehen sein, die so geformt ist, dass sie das erste Sammelrohr 22 an einer dem zweiten Sammelrohr 23 zugewandten Seite 33 zumindest teilweise übergreift. Im Beispiel der Fig. 7 und 8 weist die Anlagekontur 32 zumindest eine Anlagerippe 34 auf, die so geformt ist, dass sie an der dem zweiten Sammelrohr 23 zugewandten Seite 33 des ersten Sammelrohrs 22 in einen Zwischenraum 35 eingreift, der zwischen zwei Kondensationsrohren 19 ausgebildet ist, die in der Querrichtung 21 des Kondensators 15 zueinander benachbart sind. Zweckmäßig sind mehrere derartige Anlagerippen 34 im Bereich des Festlagers 30 ausgebildet. An der Anlagekontur 32 bzw. an den Anlagerippen 34 liegt das erste Sammelrohr 22 in der Längsrichtung 20 des Kondensators 15 an. Hierdurch erfolgt eine Fixierung des ersten Sammelrohrs 22 in der Längsrichtung 20 des Kondensators 15 am Träger 16. Durch die Anlagerippen 34, die in Zwischenräume 35 eingreifen, erfolgt gleichzeitig eine formschlüssige Fixierung des Kondensators 15 im Bereich des ersten Sammelrohrs 22 in der Querrichtung 21 des Kondensators 15 am Träger 16.

Zur Realisierung des Loslagers 31 kann gemäß den Fig. 9 und 10 in der zweiten Halterung 29 eine Gleitkontur 36 ausgebildet sein, die eine Relativbewegung des zweiten Sammelrohrs 23 in der Längsrichtung 20 des Kondensators 15 zulässt. Diese Gleitkontur 36 ist hierzu im Bereich einer Kontaktstelle 37, in der das zweite Sammelrohr 23 mit der Gleitkontur 36 in Kontakt steht, eben ausgestaltet und parallel zur Längsrichtung 20 des Kondensators 15 ausgerichtet. Die Gleitkontur 36 kann einen Endanschlag 38 definieren, der das zweite Sammelrohr 23 an einer vom ersten Sammelrohr 22 abgewandten Seite 39 übergreift. Dieser Endanschlag 38 ist hier ebenfalls rippenförmig ausgestaltet, so dass er auch als Endanschlagrippe 38 bezeichnet werden kann. Zwischen dem zweiten Sammelrohr 23 und diesem Endanschlag 38 ist üblicherweise jedoch ein Abstand 40 oder Spiel 40 vorgesehen, um die Längsbeweglichkeit des Kondensators 15 im Bereich des zweiten Sammelrohrs 23 relativ zum Träger 16 zu ermöglichen. Der Endanschlag 38 kann die Montage des Kondensators 15 am Träger 16 erleichtern.

Vorzugsweise handelt es sich beim Träger 16 um ein aus Kunststoff hergestelltes Spritzformteil. Auch ist die Lüfterzarge 17 zweckmäßig ein aus Kunststoff hergestelltes Spritzformteil. Besonders vorteilhaft ist es nun, die beiden Haltebereiche 26, 27 integral an der spritzgeformten Lüfterzarge 17 auszuformen.

Obwohl bei dem hier gezeigten Beispiel die Anlagekontur 32 bzw. die Anlagerippen 34 im Bereich des Festlagers 30 ausschließlich am ersten Auflagebereich 24 ausgeformt sind, ist grundsätzlich auch eine Ausführungsform denkbar, bei der die Anlagekontur 32 bzw. die Anlagerippen 34 ausschließlich am ersten Haltebereich 26 oder sowohl am ersten Auflagebereich 24 als auch am ersten Haltebereich 26 ausgebildet sind. Entsprechendes gilt auch für die Gleitkontur 36 und den Endanschlag 38, die im Beispiel der Fig. 9 und 10 ausschließlich im zweiten Auflagebereich 25 ausgebildet sind. Dementsprechend können die Gleitkontur 36 bzw. die Endanschlagrippe 38 auch ausschließlich im zweiten Haltebereich 27 ausgebildet sein. Ebenso ist es möglich, die Gleitkontur 36 und die Endanschlagrippe 38 sowohl am zweiten Auflagebereich 25 als auch am zweiten Haltebereich 27 auszubilden.

Bei den hier gezeigten Ausführungsformen weist der Träger 16 einen Rahmen 41 auf, der zum Befestigen der Kondensatoreinheit 6 am Fahrzeugdach 2 vorgesehen ist. An diesem Rahmen 41 sind der erste Auflagebereich 24 und der zweite Auflagebereich 25 ausgebildet. Bevorzugt ist der Rahmen 41 aus Kunststoff spritzgeformt. Zweckmäßig können die beiden Auflagebereiche 24, 25 integral am Rahmen 41 ausgeformt sein.

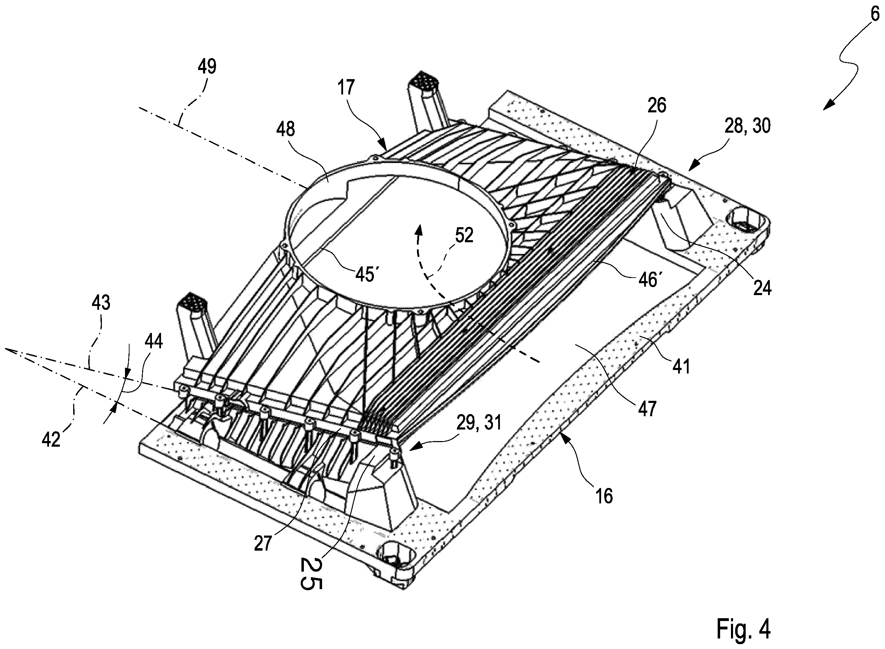

Gemäß Fig. 4 ist der Rahmen 41 im Wesentlichen eben ausgestaltet und liegt in einer Rahmenebene 42. Der Kondensator 15 ist ebenfalls weitgehend eben konfiguriert, so dass er in einer Kondensatorebene 43 liegt. Im montierten Zustand ist jedoch die Kondensatorebene 43 gegenüber der Rahmenebene 42 geneigt. Ein entsprechender Neigungswinkel 44 ist in Fig. 4 angedeutet. Ein erstes Querende 45 des Kondensators 15 ist in den Fig. 4 und 5 vom Betrachter abgewandt und ist bezüglich der Rahmenebene 42 proximal angeordnet. In Fig. 4 ist anstelle dieses ersten Querendes 45 des Kondensators 15 ein Rahmenabschnitt 45' der Lüfterzarge 17 erkennbar, an dem besagtes erstes Querende 45 bei eingebautem Kondensator 15 zur Anlage kommt. Ein zweites Querende 46 des Kondensators 15 ist bezüglich der Rahmenebene 42 distal angeordnet, jedenfalls weiter weg als das erste Querende 45. In Fig. 4 ist ein diesem zweiten Querende 46 zugeordneter Randbereich 46' der Lüfterzarge 17 erkennbar. Zwischen dem Rahmen 41 und dem Kondensator 15 ist im Bereich des zweiten Querendes 46 eine Lufteinlassöffnung 47 ausgebildet. Im Betrieb der Kondensatoreinheit 6 kann Luft aus der Umgebung 14 durch diese Lufteinlassöffnung 47 in die Kondensatoreinheit 6 eintreten.

Die Lüfterzarge 17 weist gemäß den Fig. 3 und 4 eine Luftauslassöffnung 48 auf, durch die im Betrieb der Kondensatoreinheit 6 Luft aus der Kondensatoreinheit 6 austreten und in die Umgebung 14 gelangen kann. An bzw. in dieser Luftauslassöffnung 48 ist das Kondensatorgebläse 18 angeordnet. Zweckmäßig ist das Kondensatorgebläse 18 an der Lüfterzarge 17 befestigt. Gemäß Fig. 4 liegt die Luftauslassöffnung 48 zweckmäßig in einer Auslassebene 49, die sich im Wesentlichen parallel zur Rahmenebene 42 erstreckt. Das zweite Querende 46 des Kondensators 15 liegt im Bereich dieser Auslassebene 49, wodurch insgesamt ein extrem kompakter bzw. flacher Aufbau für die Kondensatoreinheit 6 realisierbar ist. Gemäß den Fig. 2 und 3 besitzt die Haube 7 mehrere seitliche Einlassöffnungen 50, die zur Lufteinlassöffnung 47 führen, sowie eine Auslassöffnung 51, die fluchtend zur Luftauslassöffnung 48 angeordnet ist.

Die Kondensatorluftauslassöffnung 51 ist hier als im Wesentlichen kreisförmige Öffnung ausgestaltet. Anstelle einer einzigen, zentral bzw. mittig angeordneten Kondensatorluftauslassöffnung 51 können bei einer anderen, leistungsstärkeren Ausführungsform auch zwei Kondensatorluftauslassöffnungen 51 nebeneinander an der Haube 7 angeordnet sein. In den gezeigten Beispielen ist die Haube 7 bereits für zwei solche, nebeneinanderliegende Kondensatorluftauslassöffnungen 51 vorbereitet. Die entsprechenden Umlaufkonturen überschneiden sich mit der realisierten mittigen Kondensatorluftauslassöffnung 51. Für die leistungsstärkere Ausführungsform werden dann zur Realisierung der beiden nebeneinander liegenden Kondensatorluftauslassöffnungen 51 diese beiden Umlaufkonturen anstelle der mittigen Kondensatorluftauslassöffnung 51 freigeschnitten oder freigestanzt. Es ist klar, dass bei dieser leistungsstärkeren Ausführungsform dann demensprechend auch zwei Kondensatorgebläse 18 an der entsprechend angepassten Lüfterzarge 17 vorgesehen sind.

Die Lüfterzarge 17 definiert einen in Fig. 4 mit einem Pfeil angedeuteten, mit unterbrochener Linie gezeichneten Strömungskanal 52, der vom Kondensator 15 zum Kondensatorgebläse 18 führt.

## Patentansprüche

1. Kondensatoreinheit für eine Aufdachklimaanlage (3) eines Straßenfahrzeugs (1),
- mit einem Kondensator (15), der mehrere in einer Längsrichtung (20) des Kondensators (15) parallel zueinander verlaufenden Kondensationsrohre (19) aufweist, die an ihren Längsenden mit einem ersten Sammelrohr (22) des Kondensators (15) und mit einem zweiten Sammelrohr (23) des Kondensators (15) verbunden sind, die sich am jeweiligen Längsende des Kondensators (15) jeweils in einer Querrichtung (21) des Kondensators (15) erstrecken,
- mit einem Träger (16) zum Befestigen der Kondensatoreinheit (6) an einem Fahrzeugdach (2), der einen dem ersten Sammelrohr (22) zugeordneten ersten Auflagebereich (24), auf dem das erste Sammelrohr (22) aufliegt, und einen dem zweiten Sammelrohr (23) zugeordneten zweiten Auflagebereich (25) aufweist, auf dem das zweite Sammelrohr (23) aufliegt,
**dadurch gekennzeichnet,**
- **dass** die Kondensatoreinheit (6) eine Lüfterzarge (17) aufweist, die einen vom Kondensator (15) zu einem Kondensatorgebläse (18) führenden Strömungskanal (52) definiert, die am Träger (16) befestigt ist und die einen dem ersten Sammelrohr (22) zugeordneten ersten Haltebereich (26) und einen dem zweiten Sammelrohr (23) zugeordneten zweiten Haltebereich (27) aufweist,
- **dass** der Kondensator (15) mittels der Lüfterzarge (17) am Träger (16) gehalten ist, indem das erste Sammelrohr (22) mit dem ersten Haltebereich (26) am ersten Auflagebereich (24) gehalten ist, und das zweite Sammelrohr (23) mit dem zweiten Haltebereich (27) am zweiten Auflagebereich (25) gehalten ist,
- **dass** der erste Auflagebereich (24), der erste Haltebereich (26) und das erste Sammelrohr (22) bezüglich der Längsrichtung (20) des Kondensators (15) ein Festlager (30) für den Kondensator (15) bilden,
- **dass** der zweite Auflagebereich (25), der zweite Haltebereich (27) und das zweite Sammelrohr (23) bezüglich der Längsrichtung (20) des Kondensators (15) ein Loslager (31) für den Kondensator (15) bilden.

2. Kondensatoreinheit nach Anspruch 1,
**dadurch gekennzeichnet,**
**dass** am ersten Auflagebereich (24) und/oder am ersten Haltebereich (26) wenigstens eine Anlagekontur (32) vorgesehen ist, die das erste Sammelrohr (22) an einer dem zweiten Sammelrohr (23) zugewandten Seite (33) zumindest teilweise übergreift.

3. Kondensatoreinheit nach Anspruch 1 oder 2,
**dadurch gekennzeichnet,**
**dass** am ersten Auflagebereich (24) und/oder am ersten Haltebereich (26) wenigstens eine Anlagerippe (34) vorgesehen ist, die am ersten Sammelrohr (22) an einer dem zweiten Sammelrohr (23) zugewandten Seite (33) in einen Zwischenraum (35) eingreift, der zwischen zwei benachbarten Kondensationsrohren (19) ausgebildet ist.

4. Kondensatoreinheit nach einem der Ansprüche 1 bis 3,
**dadurch gekennzeichnet,**
**dass** der erste Haltebereich (26) und der zweite Haltebereich (27) an der Lüfterzarge (17) integral ausgeformt sind.

5. Kondensatoreinheit nach einem der Ansprüche 1 bis 4,
**dadurch gekennzeichnet,**
**dass** der Träger (16) einen Rahmen (41) zum Befestigen der Kondensatoreinheit (6) am Fahrzeugdach (2) aufweist, an dem der erste Auflagebereich (24) und der zweite Auflagebereich (25) ausgebildet sind.

6. Kondensatoreinheit nach Anspruch 5,
**dadurch gekennzeichnet,**
**dass** der erste Auflagebereich (24) und der zweite Auflagebereich (25) am Rahmen (41) integral ausgeformt sind.

7. Kondensatoreinheit nach Anspruch 5 oder 6,
**dadurch gekennzeichnet,**
- **dass** der Rahmen (41) im Wesentlichen eben ausgestaltet ist und in einer Rahmenebene (42) liegt,
- **dass** der Kondensator (15) im Wesentlichen eben ausgestaltet ist und in einer Kondensatorebene (43) liegt, die gegenüber der Rahmenebene (42) geneigt ist.

8. Kondensatoreinheit nach Anspruch 7,
**dadurch gekennzeichnet,**
- **dass** der Kondensator (15) im Bereich eines ersten Querendes (45) näher an der Rahmenebene (42) angeordnet ist als im Bereich eines zweiten Querendes (46),
- **dass** im Bereich des zweiten Querendes (46) des Kondensators (15) zwischen dem Rahmen (41) und dem Kondensator (15) eine Lufteinlassöffnung (47) ausgebildet ist.

9. Kondensatoreinheit nach einem der Ansprüche 1 bis 8,
**dadurch gekennzeichnet,**
**dass** die Lüfterzarge (17) eine Luftauslassöffnung (48) aufweist, an oder in der das Kondensatorgebläse (18) angeordnet und an der Lüfterzarge (17) befestigt ist.

10. Kondensatoreinheit nach den Ansprüchen 8 und 9,
**dadurch gekennzeichnet,**
- **dass** die Luftauslassöffnung (48) in einer Auslassebene (49) liegt, die sich im Wesentlichen parallel zur Rahmenebene (42) erstreckt,
- **dass** das zweite Querende (46) des Kondensators (15) im Bereich der Auslassebene (49) liegt.

11. Aufdachklimaanlage für ein Straßenfahrzeug (1),
- mit einer Verdampfereinheit (5), die wenigstens einen Verdampfer (11) aufweist,
- mit einer Kondensatoreinheit (6) nach einem der Ansprüche 1 bis 10,
- mit einer Haube (7), die die Verdampfereinheit (5) und die Kondensatoreinheit (6) abdeckt.

## Claims

1. Condenser unit for a roof-mounted air conditioning system (3) of a road vehicle (1),
- having a condenser (15) which has several condensation tubes (19) extending parallel to one another in a longitudinal direction (20) of the condenser (15), which on their longitudinal ends are connected with a first collector tube (22) of the condenser (15) and with a second collector tube (23) of the condenser (15), which extend at the respective longitudinal end of the condenser (15) in each case in a transverse direction (21) of the condenser (15),
- having a support (16) for fastening the condenser unit (6) on a vehicle roof (2), which has a first bearing area (24), assigned to the first collector tube (22), on which the first collector tube (22) bears, and a second bearing area (25), assigned to the second collector tube (23), on which the second collector tube (23) bears,
**characterised in**
- **that** the condenser unit (6) has a fan shroud (17), which defines a flow channel (52) leading from the condenser (15) to a condenser fan (18), which is fastened on the support (16) and which has a first holding area (26) assigned to the first collector tube (22) and a second holding area (27) assigned to the second collector tube (23),
- **that** the condenser (15) is held by means of the fan shroud (17) on the support (16), in that the first collector tube (22) is held with the first holding area (26) on the first bearing area (24), and the second collector tube (23) is held with the second holding area (27) on the second bearing area (25),
- **that** the first bearing area (24), the first holding area (26) and the first collector tube (22) with respect to the longitudinal direction (20) of the condenser (15) form a fixed support (30) for the condenser (15),
- **that** the second bearing area (25), the second holding area (27) and the second collector tube (23) with respect to the longitudinal direction (20) of the condenser (15) form a loose support (31) for the condenser (15).

2. Condenser unit according to claim 1,
**characterised in**
**that** on the first bearing area (24) and/or on the first holding area (26) is provided at least one bearing profile (32), which at least partially engages over the first collector tube (22) at a side (33) facing the second collector tube (23).

3. Condenser unit according to claim 1 or 2,
**characterised in**
**that** on the first bearing area (24) and/or on the first holding area (26) is provided at least one bearing rib (34), which engages on the first collector tube (22) on a side (33) facing the second collector tube (23) in an interspace (35) which is formed between two adjacent condensation tubes (19).

4. Condenser unit according to any of claims 1 to 3,
**characterised in**
**that** the first holding area (26) and the second holding area (27) are formed integrally on the fan shroud (17).

5. Condenser unit according to any of claims 1 to 4,
**characterised in**
**that** the support (16) has a frame (41) for fixing the condenser unit (6) on the vehicle roof (2), on which the first bearing area (24) and the second bearing area (25) are formed.

6. Condenser unit according to claim 5,
**characterised in**
**that** the first bearing area (24) and the second bearing area (25) are formed integrally on the frame (41).

7. Condenser unit according to claim 5 or 6,
**characterised in**
- **that** the frame (41) is formed substantially planar and lies in a frame plane (42),
- **that** the condenser (15) is formed substantially planar and lies in a condenser plane (43) which is tilted with respect to the frame plane (42).

8. Condenser unit according to claim 7,
**characterised in**
- **that** the condenser (15) in the region of a first transverse end (45) is disposed nearer to the frame plane (42) than in the region of a second transverse end (46),
- **that** in the region of the second transverse end (46) of the condenser (15) between the frame (41) and the condenser (15) is formed an air inlet opening (47).

9. Condenser unit according to any of claims 1 to 8,
**characterised in**
**that** the fan shroud (17) has an air outlet opening (48) on or in which the condenser fan (18) is disposed and fastened on the fan shroud (17).

10. Condenser unit according to claims 8 and 9,
**characterised in**
- **that** the air outlet opening (48) lies on an outlet plane (49) which extends substantially parallel to the frame plane (42),
- **that** the second transverse end (46) of the condenser (15) lies in the region of the outlet plane (49).

11. Roof-mounted air conditioning system for a road vehicle (1),
- having an evaporator unit (5) which has at least one evaporator (11),
- having a condenser unit (6) according to any of claims 1 to 10,
- having a hood (7) which covers the evaporator unit (5) and the condenser unit (6).

## Revendications

1. Unité de condensateur pour une installation de climatisation de toit (3) d'un véhicule routier (1),
- avec un condensateur (15) qui présente plusieurs tubes de condensation (19) s'étendant parallèlement les uns aux autres dans un sens longitudinal (20) du condensateur (15) qui sont raccordés sur leurs extrémités longitudinales avec un premier tube collecteur (22) du condensateur (15) et avec un second tube collecteur (23) du condensateur (15) qui s'étendent sur l'extrémité longitudinale respective du condensateur (15) respectivement dans un sens transversal (21) du condensateur (15),
- avec un support (16) pour la fixation de l'unité de condensateur (6) sur un toit de véhicule (2) qui présente une première zone d'appui (24) associée au premier tube collecteur (22) sur laquelle le premier tube collecteur (22) repose, et une seconde zone d'appui (25) associée au second tube collecteur (23), sur laquelle le second tube collecteur (23) repose,
**caractérisée en ce**
- **que** l'unité de condensateur (6) présente un châssis de ventilateur (17) qui définit un canal d'écoulement (52) menant du condensateur (15) à une soufflante de condensateur (18) qui est fixé sur le support (16) et qui présente une première zone de retenue (26) associée au premier tube collecteur (22) et une seconde zone de retenue (27) associée au second tube collecteur (23),
- **que** le condensateur (15) est maintenu au moyen du châssis de ventilateur (17) sur le support (16) en ce que le premier tube collecteur (22) est maintenu avec la première zone de retenue (26) sur la première zone d'appui (24), et le second tube collecteur (23) est maintenu avec la seconde zone de retenue (27) sur la seconde zone d'appui (25),
- **que** la première zone d'appui (24), la première zone de retenue (26) et le premier tube collecteur (22) par rapport au sens longitudinal (20) du condensateur (15) forment un palier fixe (30) pour le condensateur (15),
- **que** la seconde zone d'appui (25), la seconde zone de retenue (27) et le second tube collecteur (23) par rapport au sens longitudinal (20) du condensateur (15) forment un palier libre (31) pour le condensateur (15).

2. Unité de condensateur selon la revendication 1,
**caractérisée en ce**
**qu'**au moins un contour d'appui (32) est prévu sur la première zone d'appui (24) et/ou sur la première zone de retenue (26), lequel recouvre au moins partiellement le premier tube collecteur (22) sur un côté (33) tourné vers le second tube collecteur (23).

3. Unité de condensateur selon la revendication 1 ou 2,
**caractérisée en ce**
**qu'**au moins une nervure d'appui (34) est prévue sur la première zone d'appui (24) et/ou sur la première zone de retenue (26), laquelle vient en prise sur le premier tube collecteur (22) sur un côté (33) tourné vers le second tube collecteur (23) dans un espace intermédiaire (35) qui est réalisé entre deux tubes de condensation (19) contigus.

4. Unité de condensateur selon l'une quelconque des revendications 1 à 3,
**caractérisée en ce**
**que** la première zone de retenue (26) et la seconde zone de retenue (27) sont formées d'un seul tenant sur le châssis de ventilateur (17).

5. Unité de condensateur selon l'une quelconque des revendication 1 à 4,
**caractérisée en ce**
**que** le support (16) présente un cadre (41) pour la fixation de l'unité de condensateur (6) sur le toit de véhicule (2) sur lequel la première zone d'appui (24) et la seconde zone d'appui (25) sont réalisées.

6. Unité de condensateur selon la revendication 5,
**caractérisée en ce**
**que** la première zone d'appui (24) et la seconde zone d'appui (25) sont formées d'un seul tenant sur le cadre (41).

7. Unité de condensateur selon la revendication 5 ou 6,
**caractérisée en ce**
- **que** le cadre (41) est configuré sensiblement plan et se trouve dans un plan de cadre (42),
- **que** le condensateur (15) est configuré sensiblement plan et se trouve dans un plan de condensateur (43) qui est incliné par rapport au plan de cadre (42).

8. Unité de condensateur selon la revendication 7,
**caractérisée en ce**
- **que** le condensateur (15) est agencé dans la zone d'une première extrémité transversale (45) plus près du plan de cadre (42) que dans la zone d'une seconde extrémité transversale (46),
- **qu'**une ouverture d'entrée d'air (47) est réalisée dans la zone de la seconde extrémité transversale (46) du condensateur (15) entre le cadre (41) et le condensateur (15).

9. Unité de condensateur selon l'une quelconque des revendication 1 à 8,
**caractérisée en ce**
**que** le châssis de ventilateur (17) présente une ouverture de sortie d'air (48) sur ou dans laquelle la soufflante de condensateur (18) est agencée et est fixée sur le châssis de ventilateur (17).

10. Unité de condensateur selon les revendications 8 et 9,
**caractérisée en ce**
- **que** l'ouverture de sortie d'air (48) se trouve dans un plan de sortie (49) qui s'étend sensiblement parallèlement au plan de cadre (42),
- **que** la seconde extrémité transversale (46) du condensateur (15) se trouve dans la zone du plan de sortie (49).

11. Installation de climatisation de toit pour un véhicule routier (1),
- avec une unité d'évaporateur (5) qui présente au moins un évaporateur (11),
- avec une unité de condensateur (6) selon l'une quelconque des revendications 1 à 10,
- avec un capot (7) qui recouvre l'unité d'évaporateur (5) et l'unité de condensateur (6).
